# EUROPÄISCHE PATENTANMELDUNG

(11) **EP 3 859 894 A1**
(43) Veröffentlichungstag der Anmeldung: **04.08.2021**
(21) Anmeldenummer: 20207491.0
(22) Anmeldetag: 13.11.2020
(51) Int. Cl.: H01Q 21/06, G01S 13/87

(54) **RADAR-ANTENNENANORDNUNG**

(30) Priorität: 28.01.2020 DE 102020102033
(71) Anmelder: Krohne Messtechnik GmbH, 47058 Duisburg (DE)
(72) Erfinder: Convent, Thomas, 47661 Issum (DE); Dahl, Christoph, 44799 Bochum (DE); Gerding, Michael, 44805 Bochum (DE); Schulz, Christian, 44791 Bochum (DE); Vogt, Michael, 44797 Bochum (DE)
(74) Vertreter: Gesthuysen Patentanwälte

(57) **Zusammenfassung**

Beschrieben und dargestellt sind Radar-Antennenanordnungen (1) mit mehreren Sendeelementen (2) und mit mehreren Empfangselementen (3), wobei die Sendeelemente (2) in einer Sendeanordnung (4) und die Empfangselemente (3) in einer Empfangsanordnung (5) jeweils in Feldern einer regelmäßig hexagonal parkettierten Fläche (6) angeordnet sind und wobei sich eine zugeordnete virtuelle Antennenanordnung (7) von virtuellen Antennenelementen (8) aus der geometrischen Faltung der Sendeanordnung (4) mit der Empfangsanordnung (5) ergibt.

Eine hohe Winkelauflösung und gute Ausrichtbarkeit bei guter Richtungsunabhängigkeit lassen sich erzielen, indem die Empfangselemente (3) in der Empfangsanordnung (5) und die Sendeelemente (2) in der Sendeanordnung (4) so angeordnet sind, dass die virtuellen Antennenelemente (8) in der virtuellen Antennenanordnung (7) überdeckungsfrei angeordnet sind.

## Beschreibung

Die Erfindung betrifft eine Radar-Antennenanordnung mit mehreren Sendeelementen und mit mehreren Empfangselementen, wobei die Sendeelemente in einer Sendeanordnung und die Empfangselemente in einer Empfangsanordnung jeweils in Feldern einer regelmäßig hexagonal parkettierten Fläche angeordnet sind und wobei sich eine zugeordnete virtuelle Antennenanordnung von virtuellen Antennenelementen aus der geometrischen Faltung der Sendeanordnung mit der Empfangsanordnung ergibt.

Radar-Antennenanordnungen der zuvor genannten Art sind aus dem Stand der Technik bekannt, beispielsweise aus Dahl et al.: "MIMO Radar Concepts based on Antenna Arrays with Fractal Boundaries", Proceedings of the 13th European Radar Conference, 2016, Seiten 41-44 oder Biallawons et al.: "MI-MO concept for the imaging radar of the radar warning and information system RAWIS", 11th European Conference on Synthetic Aperture Radar EU-SAR 2016, Seiten 75-78. Derartige Radar-Antennenordnungen werden häufig als Patch-Antennenfelder realisiert, die beispielsweise - eine geeignete Ansteuerung und Auswertung der Sendeanordnung und der Empfangsanordnung vorausgesetzt - elektronisch geschwenkt werden können, indem die Sendeelemente mit entsprechenden Phasenverzögerung angesteuert werden, sodass sich von der Hauptabstrahlrichtung abweichende Abstrahlrichtungen ergeben.

Der Vorteil der Mehrzahl von Sendeelementen und Empfangselementen besteht darin, insbesondere wenn sie nach dem MIMO-Prinzip, also unabhängig voneinander, betrieben werden, dass jede Kombination eines Sendeelements mit jedem Empfangselement ein virtuelles Antennenelement erzeugt, sodass bei m Empfangselementen und n Sendeelementen maximal n*m virtuelle Antennenelemente resultieren, deren Positionen sich aus der geometrischen Faltung der Positionen der Sendeelemente in der Sendeanordnung mit den Positionen der Empfangselemente in der Empfangsanordnung ergeben. Anschaulich gesprochen handelt es sich bei der geometrischen Faltung der Strukturen von Sendeanordnung und Empfangsanordnung um eine Verschiebe- und Überlagerungsoperation, wobei die Sendeanordnung bzw. die Empfangsanordnung an die einzelnen Positionen der Empfangselemente bzw. die einzelnen Positionen der Sendeelemente verschoben wird, wodurch in Summe die Positionen der virtuellen Antennenfelder resultieren. Die virtuelle Antennenanordnung hat zwangsweise eine größere Apertur als die Aperturen der Empfangsanordnung und der Sendeanordnung und charakterisiert die Abbildungseigenschaften der Radar-Antennenanordnung, wenn sie nach dem MIMO-Prinzip betrieben wird.

Aufgabe der vorliegenden Erfindung ist es, solche Radar-Antennenanordnungen anzugeben, die eine möglichst gute Winkelauflösung und auch elektronische Schwenkbarkeit aufweisen, wobei die Eigenschaften möglichst isotrop sind, also richtungsunabhängig.

Die zuvor hergeleitete Aufgabe wird bei der eingangs genannten Radar-Antennenanordnung dadurch erreicht, dass die Empfangselemente in der Empfangsanordnung und die Sendeelemente in der Sendeanordnung so angeordnet sind, dass die virtuellen Antennenelemente in der virtuellen Antennenanordnung überdeckungsfrei angeordnet sind. Durch diese Maßgabe wird bewirkt, dass die Ausbeute an virtuellen Antennenelementen in der virtuellen Antennenanordnung maximal ist, wodurch Winkelauflösung und (elektronische) Schwenkbarkeit positiv beeinflusst werden.

Bei einer vorteilhaften Ausgestaltung der Radar-Antennenanordnung ist vorgesehen, dass die Sendeelemente und die Empfangselemente in Feldern einer gemeinsamen regelmäßig hexagonal parkettierten Fläche überdeckungsfrei angeordnet sind. Dies bietet vor allem konstruktive Vorteile, da es keine Überdeckungen von bzw. Kollisionen zwischen Positionen von Sendelementen und Empfangselementen geben kann. Auch hinsichtlich der immer vorzunehmenden elektrischen Kontaktierung von Sendeelementen und Empfangselementen ist dies von Vorteil, da durch diese Vorgabe der Auslegung Mindestabstände zwischen Sendeelementen und Empfangselementen gewährleistet sind.

Gemäß einer bevorzugten Ausgestaltung ist bei der Radar-Antennenanordnung ferner vorgesehen, dass mehrere Sendeelemente eine Sendeelementgruppe bilden oder dass mehrere Empfangselemente eine Empfangselementgruppe bilden, wobei die Radar-Antennenanordnung mehrere gleichartige Sendeelementgruppen bzw. Empfangselementgruppen aufweist. Eine nach dieser Maßgabe gestaltete Radar-Antennenanordnung hat teilweise Vorteile aufgrund der sich ergebenden wiederkehrenden Strukturen in der virtuellen Antennenanordnung. Ein weiterer Vorteil besteht darin, dass wiederkehrende Strukturen in der Radar-Antennenanordnung auch wiederkehrende Strukturen in der Realisierung der Radar-Elektronik ermöglichen. Darüber hinaus ergeben sich auch vorteilhafte Möglichkeiten bei der gewünschten Realisierung von Radar-Antennenanordnungen mit besonderen Symmetrieeigenschaften. Insbesondere zeichnet sich in dieser Hinsicht eine weitere vorteilhafte Ausgestaltung dadurch aus, dass die mehreren gleichartigen Sendeelementgruppen oder die mehreren gleichartigen Empfangselementgruppen so angeordnet sind, dass die Sendeanordnung und/oder die Empfangsanordnung eine Rotationssymmetrie von 60° oder eine Rotationssymmetrie von 120° aufweisen. Eine derartige Symmetrie überträgt sich aufgrund der geometrischen Faltung von Sendeanordnung mit der Empfangsanordnung auch auf die virtuelle Antennenanordnung, was sich bei geschickter Wahl der geometrischen Ausgestaltung der Sendeelementgruppen bzw. der Empfangselementgruppen auf die Richtungsunabhängigkeit der Abstrahl- und Empfangseigenschaften der Radar-Antennenanordnung auswirkt. Bei der Frage danach, ob eine bestimmte Anordnung von mehreren Empfangselementgruppen und/oder von mehreren Sendeelementgruppen als eine Rotationssymmetrie aufweisend angesehen wird, kann eine mathematisch strenge oder eine weniger strenge Definition von Rotationssymmetrie herangezogen werden. Bei der mathematisch strengen Definition werden sowohl die Positionen als auch die Orientierungen der Empfangs- und/oder Sendeelementgruppen betrachtet. Bei der mathematisch schwächeren Definition werden nur die Positionen der Empfangs- und/oder Sendeelementgruppen betrachtet, die Orientierung der Empfangs- und/oder Sendeelementgruppen spielt keine Rolle, die Empfangs- und/oder Sendeelementgruppen werden also jede für sich gleichsam als in einem Punkt konzentriert angesehen.

Bei einer weiteren bevorzugten Ausgestaltung der Radar-Antennenanordnung ist vorgesehen, dass eine überwiegende Zahl der Sendeelemente der Sendeanordnung für sich alleine oder gruppiert in Sendeelementgruppen mit mehreren Sendeelementen auf einem Sende-Kreisumfang angeordnet ist bzw. sind, insbesondere regelmäßig verteilt auf dem Sende-Kreisumfang angeordnet ist bzw. sind. Dies hat die Vorteile, dass aufgrund der Kreisform eine größtmögliche Richtungsunabhängigkeit realisiert wird und gleichzeitig auch eine maximale Apertur realisiert ist, und zwar sowohl bei der Sendeanordnung wie auch bei der virtuellen Antennenanordnung. Speziell ist vorgesehen, dass alle bis auf drei der Sendeelemente der Sendeanordnung auf dem Sende-Kreisumfang angeordnet sind, insbesondere vollständig alle Sendeelemente der Sendeanordnung auf dem Sende-Kreisumfang angeordnet sind. Dies alles gilt entsprechend natürlich auch für die Empfangselemente, weshalb dies hier nicht noch einmal ausformuliert wiederholt wird. Grundsätzlich gilt für alle Merkmale, die der Sendeanordnung oder der Empfangsanordnung zugewiesen werden, dass dann entsprechende Überlegungen auch immer gültig sind für die Empfangsanordnung bzw. die Sendeanordnung.

Eine weitere bevorzugte Radar-Antennenanordnung ist dadurch ausgezeichnet, dass die Empfangselemente der Empfangsanordnung innerhalb eines Empfang-Kreisumfangs angeordnet sind, insbesondere wobei der Empfang-Kreisumfang identisch ist mit dem Sende-Kreisumfang, oder wobei der Empfang-Kreisumfang kleiner ist als der Sende-Kreisumfang, bevorzugt konzentrisch angeordnet ist zum Sende-Kreisumfang. So lassen sich kompakte Anordnungen realisieren, die ebenfalls eine gute Richtungsunabhängigkeit aufweisen. Auch sind Anordnungen realisierbar, bei denen sich die Empfangsanordnung innerhalb der Sendeanordnung befindet und praktisch von dieser umgeben ist. Genau die gleichen Überlegungen sind - wie oben ausgeführt - entsprechend gültig bei vertauschten Rollen von Sende- und Empfangselementen, was nachfolgend nicht mehr ausdrücklich betont wird.

Eine weitere Radar-Antennenanordnung hat bestimmte vorteilhafte Eigenschaften, indem je drei Sendeelemente eine dicht gepackte dreieckförmige Sendeelementgruppe bilden und insgesamt sechs dieser Sendeelementgruppen gleichmäßig auf dem Sende-Kreisumfang verteilt sind, insbesondere wobei eine weitere dieser Sendeelementgruppen im Zentrum des Sende-Kreisumfangs angeordnet ist.

Als vorteilhaft hat sich auch erwiesen, dass die Empfangselemente locker zusammenhängend angeordnet sind, wobei jedes Empfangselement von sechs unbesetzten Feldern der regelmäßig hexagonal parkettierten Fläche umgeben ist und jedes Empfangselement entweder über wenigstens ein benachbartes unbesetztes Feld der regelmäßig hexagonal parkettierten Fläche zu zwei Empfangselementen benachbart ist oder über wenigstens zwei unmittelbar und auch miteinander benachbarte unbesetzte Felder der regelmäßig hexagonal parkettierten Fläche zu zwei Empfangselementen benachbart ist. Es kann zusätzlich vorgesehen sein, dass im Zentrum der Anordnung unbesetzte Felder in der regelmäßig hexagonal parkettierten Fläche vorgesehen sind, wobei diese unbesetzten Felder in Summe eine Dreiecksform bilden.

Ein weiteres bevorzugtes Ausführungsbeispiel ist dadurch gekennzeichnet, dass eine Sendeelementgruppe oder die Sendeanordnung drei Sendeelemente umfasst, wobei die drei Sendeelemente dicht gepackt sind, also jedes Sendeelement unmittelbar zu den beiden anderen Sendeelementen benachbart ist, oder wobei die drei Sendeelemente ein gemeinsames unbesetztes Feld der regelmäßig hexagonal parkettierten Fläche einschließen, oder wobei die drei Sendeelemente drei unmittelbar miteinander benachbarte unbesetzte Felder der regelmäßig hexagonal parkettierten Fläche einschließen, wobei die drei Sendeelemente die Eckpunkte eines gleichseitigen Dreiecks bilden.

Bei einer anderen vorteilhaften Radar-Antennenanordnung umfasst eine Sendeelementgruppe oder die Sendeanordnung vier Sendeelemente, wobei drei der Sendeelemente die Eckpunkte eines gleichseitigen Dreiecks bilden und das vierte Sendeelement im Zentrum des gleichseitigen Dreiecks platziert ist.

Bei einer noch anderen vorteilhaften Radar-Antennenanordnung umfasst eine Sendeelementgruppe oder die Sendeanordnung fünf Sendeelemente, wobei drei Sendeelemente in drei linear benachbarten Feldern, also Flachseite an Flachseite, angeordnet sind und senkrecht symmetrisch dazu zwei Sendeelemente in benachbarten Feldern angeordnet sind, also Spitze an Spitze. Diesbezüglich ist es weiter vorteilhaft, wenn drei Sendeelementgruppen vorgesehen sind, die 120°-rotationssymmetrisch angeordnet sind und ein zusätzliches gemeinsames Sendeelement aufweisen, zu dem die Sendeelementgruppen.

Im Hinblick auf die Radar-Antennenanordnung mit insgesamt fünf Sendeelementen ist bei einer alternativen Ausgestaltung vorgesehen, dass die fünf Sendeelemente in gleicher Konfiguration, also drei Elemente linear, dazu zwei Elemente symmetrisch senkrecht, locker zusammenhängend angeordnet sind, wobei jedes Sendeelement von sechs unbesetzten Feldern der regelmäßig hexagonal parkettierten Fläche umgeben ist.

Ein bevorzugtes Merkmal einer Radar-Antennenanordnung zeichnet sich dadurch aus, dass die Anzahl der Sendeelemente zu der Anzahl der Empfangselemente im Verhältnis 3 zu 4 steht. Dadurch lassen sich entsprechende Elektronikkomponenten verwenden, die im gleichen Verhältnis Anschlüsse bereitstellen und die in großen Stückzahlen zu vergleichsweise niedrigen Preisen verfügbar sind; derartige Bauelemente finden beispielsweise im automotiven Bereich häufig Verwendung.

Es gibt nun verschiedene Möglichkeiten, die erfindungsgemäße Radar-Antennenanordnung ausgestalten und weiterzubilden. Dazu wird verwiesen auf die den unabhängigen Patentansprüchen nachgeordneten Patentansprüche und auf die nachfolgende Beschreibung von Ausführungsbeispielen in Verbindung mit der Zeichnung. Der Zeichnung kommt bei dem vorliegenden Erfindungsgegenstand eine besondere Bedeutung zu, da die Anordnungen teilweise eine komplexe Geometrie und Struktur aufweisen, die mit vertretbarem Aufwand weder mit Worten noch mathematisch griffig beschrieben werden können. Die grafische Darstellung ist deshalb ein zentrales Mittel zur Offenbarung der interessierenden Strukturen und Geometrien, weshalb auch in den Patentansprüchen auf die Figuren ausnahmsweise Bezug genommen wird. In der Zeichnung zeigen:
- Fig. 1: ein Ausführungsbeispiel für eine Radar-Antennenanordnung mit wenigen Sendeelementen und Empfangselementen,
- Fig. 2: eine mögliche Kombination der Sendeanordnung und der Empfangsanordnung gemäß Figur 1 in einer gemeinsamen RadarAntennenanordnung,
- Fig. 3a, 3b: eine hexagonale Anordnung von Sendeelementen bzw. Empfangselementen,
- Fig. 4a, 4b: eine Anordnung von Sendeelementen bzw. Empfangselementen, die locker zusammenhängend angeordnet sind,
- Fig. 5: eine Radar-Antennenanordnung, die zu einer 120°-rotationssymmetrischen dichten virtuellen Antennenanordnung führt,
- Fig. 6: eine Radar-Antennenanordnung, die zu einer 120°-rotationssymmetrischen ausgedünnten virtuellen Antennenanordnung führt,
- Fig. 7a, b, c: Ausführungsbeispiele von Radar-Antennenanordnungen mit wenigen Sendeelementen und Empfangselementen,
- Fig. 8: eine Radar-Antennenanordnung mit 16 Empfangselementen und 4 Sendeelementen,
- Fig. 9: eine Radar-Antennenanordnung mit 3 Empfangselementen und 16 Sendeelementen,
- Fig. 10: eine Radar-Antennenanordnung mit 3 Empfangselementen und 64 Sendeelementen und
- Fig. 11: eine Radar-Antennenanordnung mit 7 Empfangselementen und 64 Sendeelementen.

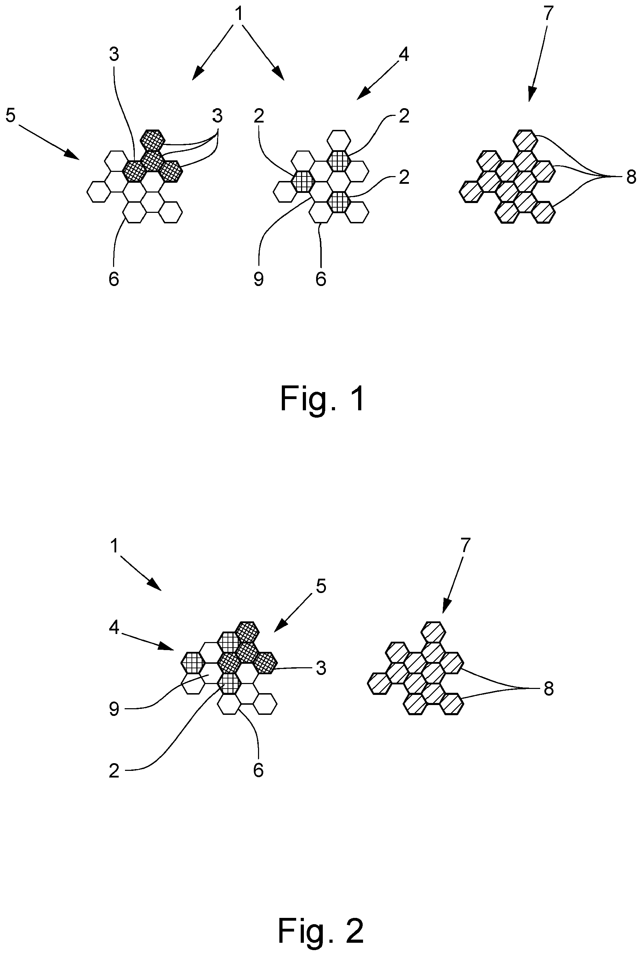

In den Fig. 1 bis 11 sind verschiedene Radar-Antennenanordnungen 1 in Gänze oder auch nur teilweise gezeigt. Die Radar-Antennenanordnungen 1 weisen jeweils mehrere Sendeelemente 2 und auch mehrere Empfangselemente 3 auf, wobei die Sendeelemente 2 in einer Sendeanordnung 4 und die Empfangselemente 3 in einer Empfangsanordnung 5 in Feldern einer regelmäßig hexagonal parkettierten Fläche 6 überdeckungsfrei angeordnet sind.

Die hexagonal parkettierte Fläche 6 ist jeweils durch ein hexagonales Raster angedeutet. Mit Sendeelementen 2 und mit Empfangselementen 3 besetzte Felder sind durch entsprechende Schraffuren kenntlich gemacht. Um eine gewisse Übersicht zu erhalten, sind nicht alle Sendeelemente und nicht alle Empfangselemente mit Bezugszeichen versehen, sondern nur einige wenige; dies tut dem Verständnis keinen Abbruch.

Die überdeckungsfreie Anordnung der Sendeelemente 2 und der Empfangselemente 3 in den Feldern der hexagonal parkettierten Fläche 6 bedeutet, dass in einem hexagonalen Feld niemals gleichzeitig ein Sendeelement 2 und ein Empfangselement 3 gleichzeitig realisiert sind. Die gezeigten hexagonalen Felder bedeuten nicht, dass auch die in diesen Feldern angeordneten Sendeelemente oder Empfangselemente eine hexagonale Grundstruktur haben; dies kann so sein, muss aber nicht so sein.

Den Radar-Antennenanordnungen 1 lässt sich eine virtuelle Antennenanordnung 7 von virtuellen Antennenelementen 8 zuordnen, wobei sich die Positionen der virtuellen Antennenelemente 8 aus der geometrischen Faltung der Positionen der Sendeelemente 2 in der Sendeanordnung 4 mit den Positionen der Empfangselemente 3 in der Empfangsanordnung 5 ergeben. Jedes Sendeelement 2 wirkt mit jedem Empfangselement 3 zusammen, wobei das Zusammenwirken aller Sendeelemente 2 mit allen Empfangselementen 3 durch die zuvor beschriebene geometrische Faltung beschrieben wird.

Die Position der Sendeanordnung 4 zu der Empfangsanordnung 5 hat grundsätzlich keine Auswirkung auf die geometrische Struktur der zugeordneten und resultierenden virtuellen Antennenanordnung 7. Auch die Wirkung der resultierenden virtuellen Antennenanordnung 7 ändert sich nicht, jedenfalls nicht bei einer Fernfeldbetrachtung, also bei Betrachtung der Feldcharakteristik in einem großen Abstand gegenüber den Abmessungen der Antennenanordnung 1. Die Sendeanordnung 4 kann also zu ihrer Empfangsanordnung 5 verschoben werden, ohne dass dies Einfluss auf das Aussehen der virtuellen Antennenanordnung 7 an sich hat. Durch das Verschieben der Sendeanordnung 4 gegenüber der Empfangsanordnung 5 kann jedoch die physikalische Kopplung der Sendeanordnung 4 mit der Empfangsanordnung 5 beeinflusst werden.

Die grundsätzlichen Zusammenhänge sind gut anhand der Figuren 1 und 2 ersichtlich, die nur wenige Sendeelemente 2 und Empfangselemente 3 aufweisen. Die Sendeanordnung 4 verfügt über drei Sendeelemente 2 und die Empfangsanordnung 5 verfügt über vier Empfangselemente 3. Die Sendeelemente 2 schließen drei unmittelbar benachbarte unbesetzte Felder 9 der regelmäßig hexagonal parkettierten Fläche 6 ein. Die Empfangsanordnung 5 umfasst vier Empfangselemente 3, wobei drei der Empfangselemente 3 die Eckpunkte eines gleichseitigen Dreiecks bilden und wobei das vierte Empfangselement 3 im Zentrum des gleichseitigen Dreiecks platziert ist. Ganz rechts in Fig. 1 ist die resultierende virtuelle Antennenanordnung 7 mit den virtuellen Antennenelementen 8 gezeigt, die aus der geometrischen Faltung der Sendeanordnung 4 mit der Empfangsanordnung 5 resultiert. Es ist erkennbar, dass die Apertur der virtuellen Antennenanordnung 8 deutlich größer ist als die Aperturen der Sendeanordnung 4 oder der Empfangsanordnung 5, was sich positiv auf das Auflösungsvermögen der Radar-Antennenanordnung 1 auswirkt. Die Sendeanordnung 4 und die Empfangsanordnung 5 sind hier nebeneinander dargestellt, damit sie in der Darstellung besser voneinander unterschieden werden können.

In Fig. 2 ist strukturell eine identische Sendeanordnung 4 und eine identische Empfangsanordnung 5 wie in Fig. 1 gezeigt. Hier sind die Anordnungen 4, 5 jedoch ineinander verschoben, was keine Auswirkung auf das Aussehen der resultierenden virtuellen Antennenanordnung 7 hat. So kann die Radar-Antennenanordnung 1 mit der Sendeanordnung 4 und der Empfangsanordnung 5 gemäß Fig. 1 sehr kompakt realisiert werden. In den nachfolgenden Figuren sind die Sendeanordnungen 4 und die Empfangsanordnungen 5 zumeist separat dargestellt, damit die Strukturen besser erkennbar sind. Die Sendeanordnungen 4 und die Empfangsanordnungen 5 können - sofern überdeckungsfrei möglich - auch ineinander verschoben werden, wie dies anhand der Ausführungsbeispiele in den Fig. 1 und 2 gezeigt worden ist. Wie zuvor bereits erläutert worden ist, hat jede dargestellte Radar-Antennenanordnung 1 eine vollkommen entsprechende Radar-Antennenanordnung, bei der Sendeelemente durch Empfangselemente ersetzt sind und umgekehrt.

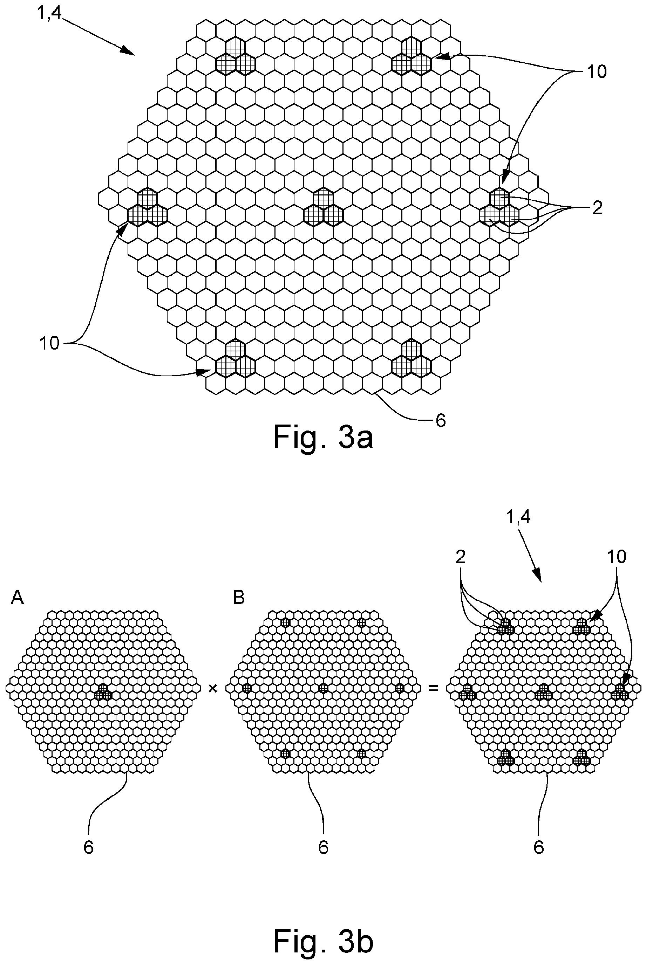

Fig. 3b zeigt, wie durch die geometrische Faltung der imaginären Sendeanordnungen A, B die reale Sendeanordnung 4 erhalten werden kann, die separat in Fig. 3a dargestellt ist.

Den Radar-Anordnungen 1 in den Fig. 1 bis 11 ist gemeinsam, dass die Empfangselemente 3 in der Empfangsanordnung 5 und die Sendeelemente 2 in der Sendeanordnung 4 so angeordnet sind, dass die virtuellen Antennenelemente 8 in der virtuellen Antennenanordnung 7 überdeckungsfrei angeordnet sind. Dadurch ergibt sich eine maximal mögliche Anzahl von wirksamen virtuellen Antennenelementen 8, wodurch die Winkelauflösung und auch die signaltechnische Schwenkbarkeit der dargestellten Radar-Antennenanordnungen positiv beeinflusst werden.

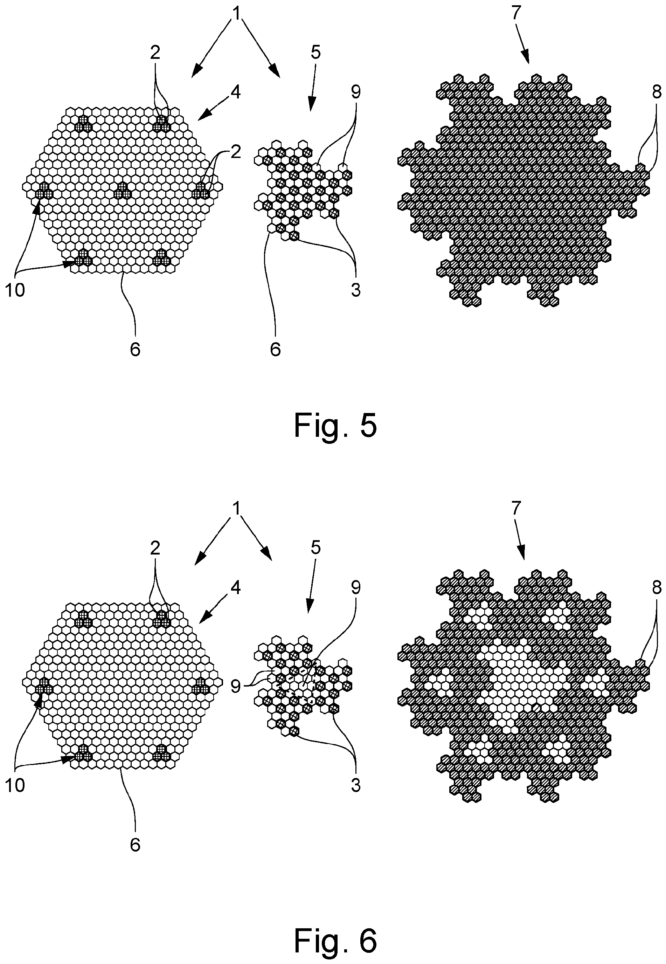

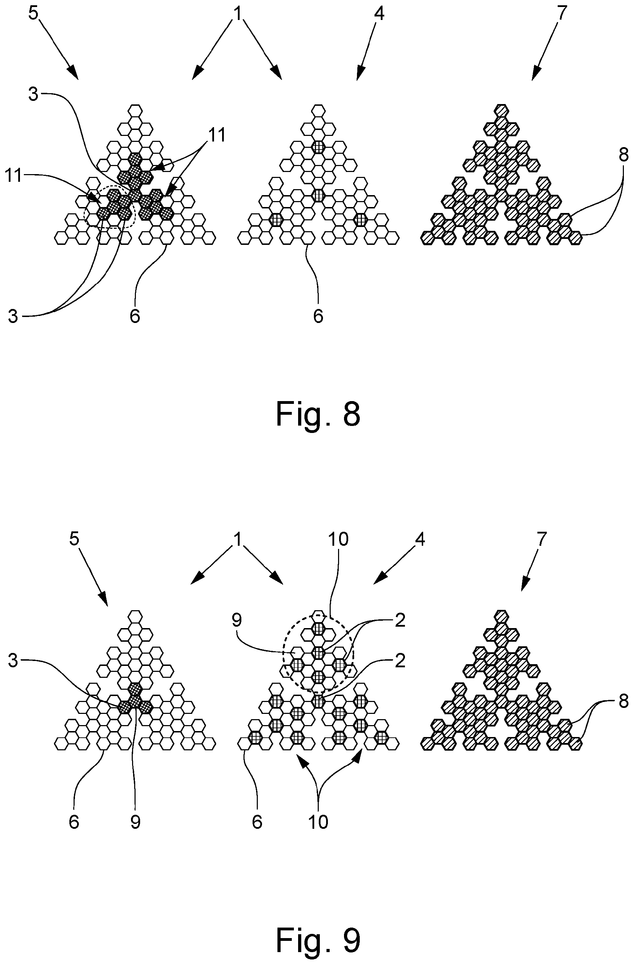

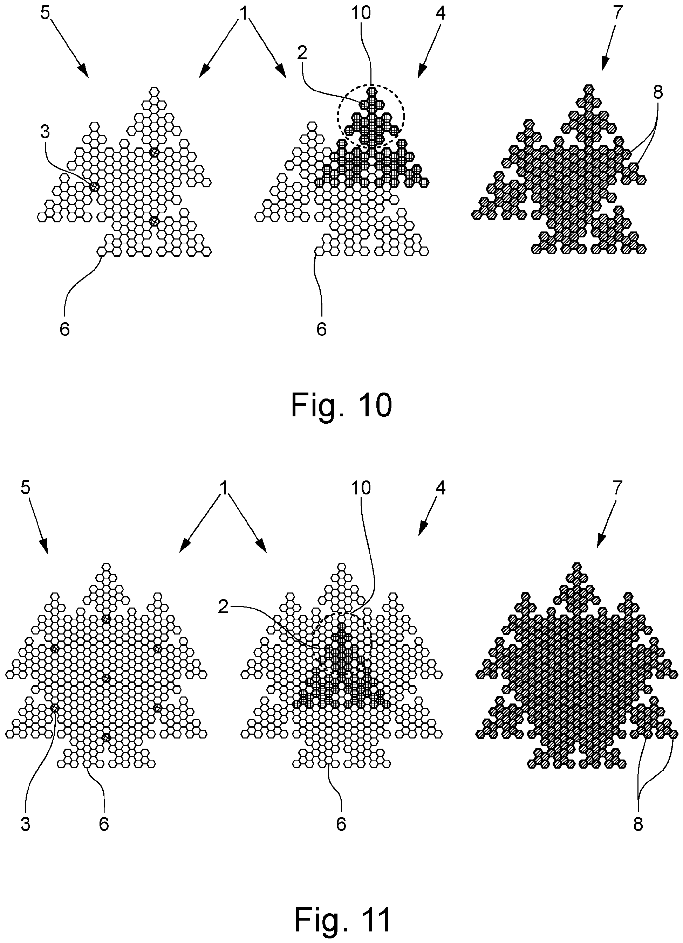

In den Ausführungsbeispielen gemäß den Fig. 3, 5, 6 und 8 bis 11 ist vorgesehen, dass mehrere Sendeelemente 2 eine Sendeelementgruppe 10 bilden und/oder mehrere Empfangselemente 3 eine Empfangselementgruppe 11 bilden, wobei die Radar-Antennenanordnungen dann mehrere gleichartige Sendeelementgruppen 10 und/oder Empfangselementgruppen 11 aufweisen. Bei mehreren der Ausführungsbeispiele sind die mehreren gleichartigen Sendeelementgruppen 10 und/oder die mehreren gleichartigen Empfangsgruppen 11 so angeordnet, dass die Sendeanordnung 4 und/oder die Empfangsanordnung 5 eine Rotationssymmetrie von 60° oder eine Rotationssymmetrie von 120° aufweisen. In Fig. 3a beispielsweise sind sieben Sendeelementgruppen 10 von der Sendeanordnung 4 umfasst, wobei jede Sendeelementgruppe 10 aus drei Sendeelementen 2 besteht, die dicht gepackt sind. Das Gleiche gilt für die Sendeanordnung 4 in Fig. 5. Die Sendeanordnung 4 gemäß Fig. 6 unterscheidet sich in der Anzahl der Sendeelementgruppen 10, hier sind im Unterschied zu dem Ausführungsbeispiel gemäß Fig. 5 nur sechs Sendeelementgruppen 10 realisiert. In Fig. 8 weist die Empfangsanordnung 5 drei Empfangselementgruppen 11 auf, die über ein zentrales Empfangselement 3 gemeinsam miteinander benachbart sind. In Fig. 9 weist die Sendeanordnung 4 drei Sendeelementgruppen 10 mit jeweils vier Sendeelementen 2 auf, und auch hier existiert ein zentrales Sendeelement 2. In den Fig. 10 und 11 werden identische Sendeanordnungen 4 mit jeweils drei gleichartigen Sendeelementgruppen 10 verwendet, der Unterschied liegt hier in der Anzahl und Anordnung der Empfangselemente 3 in der Empfangsanordnung 5.

In den Figuren, in denen mehrere gleichartige Sendeelementgruppen 10 bzw. mehrere gleichartige Empfangselementgruppen 11 dargestellt sind, sind diese zugleich so angeordnet, dass die betroffenen Sendeanordnungen 4 und/oder die betroffenen Empfangsanordnungen 5 eine Rotationssymmetrie von 60° (Fig. 3, 5 und 6 bei Annahme einer mathematisch schwachen Definition von Rotationssymmetrie) oder eine Rotationssymmetrie von 120° (Fig. 3, 4, 5, 6 und 8 bis 11) aufweisen.

Bei den Ausführungsbeispielen gemäß den Fig. 1 bis 3 und 5 bis 11 ist eine überwiegende Zahl der Sendeelemente 2 der Sendeanordnung 4 entweder für sich alleine oder gruppiert in Sendeelementgruppen 10 mit mehreren Sendeelementen 2 auf einem (gedachten) Sende-Kreisumfang angeordnet, vorliegend sogar regelmäßig verteilt auf dem Sende-Kreisumfang angeordnet. Bei dem Ausführungsbeispiel gemäß Fig. 6 sind sogar vollständig alle Sendeelemente 2 - hier in Sendeelementgruppen 10 angeordnet - auf einem Sende-Kreisumfang angeordnet, bei den anderen Ausführungsbeispielen ist jeweils auch ein weiteres Sendeelement 2 im Zentrum des Sende-Kreisumfangs vorgesehen. Entsprechendes gilt auch für die Ausführungsbeispiele in den Fig. 1, 2, 7 bis 11 für die Empfangselemente 3 der Empfangsanordnung 5 für sich alleine genommen oder gruppiert in Empfangselementgruppen 11 mit mehreren Empfangselementen 3. Bei den Ausführungsbeispielen gemäß den Fig. 9 und 10 sind vollständig alle Empfangselemente 3 der Empfangsanordnung 5 auf dem nicht dargestellten Empfang-Kreisumfang angeordnet.

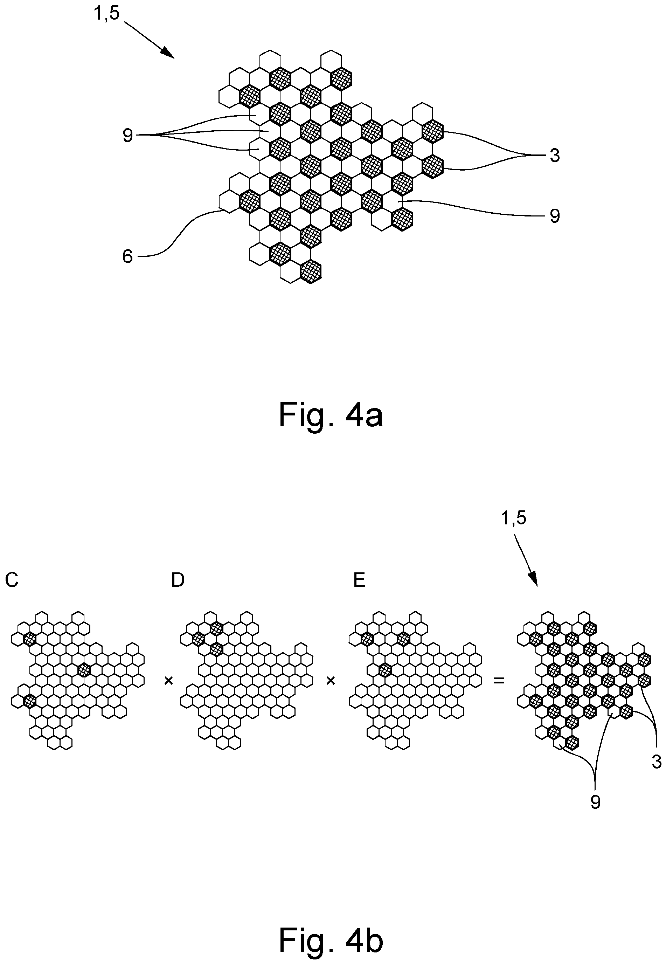

In Fig. 4a ist eine Empfangsanordnung 5 dargestellt, deren Empfangselemente 3 innerhalb eines nicht dargestellten Empfang-Kreisumfangs angeordnet sind. Fig. 4b verdeutlicht lediglich, wie durch geometrische Faltung dreier verschiedener imaginärer Empfangsanordnungen (C, D, E) die reale Empfangsanordnung 5 erhalten werden kann, die separat in Fig. 4a dargestellt ist. Die gleiche in den Fig. 4a, 4b dargestellte Empfangsanordnung 5 ist auch noch einmal Gegenstand von Fig. 5. Hier ist die Empfangsanordnung 5 zusammen dargestellt mit der Sendeanordnung 4, die schon aus Fig. 3 bekannt ist. Werden die Sendeanordnung 4 und die Empfangsanordnung 5 gemäß Fig. 5 miteinander kombiniert, resultiert die in Fig. 5 dargestellte virtuelle Antennenanordnung 7, die extrem kompakt ist und eine gute Annäherung an eine Kreisform darstellt. Damit ist diese Radar-Antennenanordnung 1 in besonderem Maße geeignet, um eine möglichst isotrope Winkelauflösung und auch elektronische Neigbarkeit zu erzielen.

Das Ausführungsbeispiel gemäß Fig. 6 entspricht dem Ausführungsbeispiel gemäß Fig. 5, wobei jedoch hier Zentralelemente weggelassen worden sind, und zwar sowohl bei der Sendeanordnung 4, wie auch bei der Empfangsanordnung 5. Dadurch wird auch eine ausgedünnte virtuelle Antennenanordnung 7 erzielt, die ebenfalls in Fig. 6 dargestellt ist. Es ist gut vorstellbar, dass die Empfangsanordnung 5 in einem Empfang-Kreisumfang angeordnet ist, der kleiner ist als der Sende-Kreisumfang der Sendeanordnung 4. Eine tatsächliche Implementierung der Radar-Antennenanordnung 1 gemäß Fig. 6 könnte also auch so aussehen, dass die Empfangsanordnung 5 innerhalb der Sendeanordnung 4 angeordnet ist, also der gedachte Empfang-Kreisumfang und der gedachte Sende-Kreisumfang quasi konzentrisch zueinander liegen. Es könnte natürlich eine analoge Realisierung der Radar-Antennenanordnung vorgenommen werden, bei der die Sendeelemente 2 und Empfangselemente 3 ausgetauscht werden.

Die Fig. 3, 5 und 6 zeigen Radar-Antennenanordnungen 1, bei denen je drei Sendeelemente 2 eine dicht gepackte dreieckförmige Sendeelementgruppe 10 bilden und insgesamt sechs dieser Sendeelementgruppen 10 gleichmäßig auf dem Sende-Kreisumfang verteilt sind. Eine weitere dieser Sendeelementgruppen 10 ist im Zentrum des Sende-Kreisumfangs angeordnet bei den Radar-Antennenanordnungen in den Fig. 3 und 5.

Bei den Radar-Anordnungen 1 in den Fig. 4, 5 und 6 sind die Empfangselemente 3 in den gezeigten Empfangsanordnungen 5 locker zusammenhängend angeordnet, wobei jedes Empfangselement 3 von sechs unbesetzten Feldern 9 der regelmäßig hexagonal parkettierten Fläche 6 umgeben ist. Jedes Empfangselement 3 ist über wenigstens ein benachbartes unbesetztes Feld 9 der regelmäßig hexagonal parkettierten Fläche 6 zu zwei anderen Empfangselementen 3 benachbart. insbesondere gemäß den Figuren 4, 5 und 6. In Fig. 6 sind im Zentrum der Anordnung unbesetzte Felder 9 in der regelmäßig hexagonal parkettierten Fläche 6 vorgesehen, wobei diese unbesetzten Felder in Summe eine Dreiecksform bilden.

Bei den Radar-Antennenanordnungen 1 gemäß den Fig. 3, 5, 6 und 7a, umfasst eine Sendeelementgruppe 10 oder die Sendeanordnung 4 drei Sendeelemente 2 bzw. umfasst eine Empfangselementgruppe 11 oder die Empfangsanordnung 5 drei Empfangselemente 3, wobei die drei Sendeelemente 2 oder die drei Empfangselemente 3 dicht gepackt sind, also jedes Sendeelement 2 unmittelbar zu den beiden anderen Sendeelementen 2 benachbart ist bzw. jedes Empfangselement 3 unmittelbar zu den beiden anderen Empfangselementen 3 benachbart ist. Durch diese Anordnung wird auf kleinster Fläche die 120°-Rotationssymmetrie der hexagonalen Parkettierung genutzt, in Fig. 9 ist gezeigt, dass drei Empfangselemente 3 ein gemeinsames unbesetztes Feld 9 der regelmäßig hexagonal parkettierten Fläche 6 einschließen. Bei den Radar-Anordnungen gemäß den Fig. 1 und 2 hingegen schließen drei Sendeelemente 2 drei unmittelbar benachbarte unbesetzte Felder 9 der regelmäßig hexagonal parkettierten Fläche 6 ein. In Fig. 10 bilden drei Empfangselemente 3 die Eckpunkte eines größeren gleichseitigen Dreiecks.

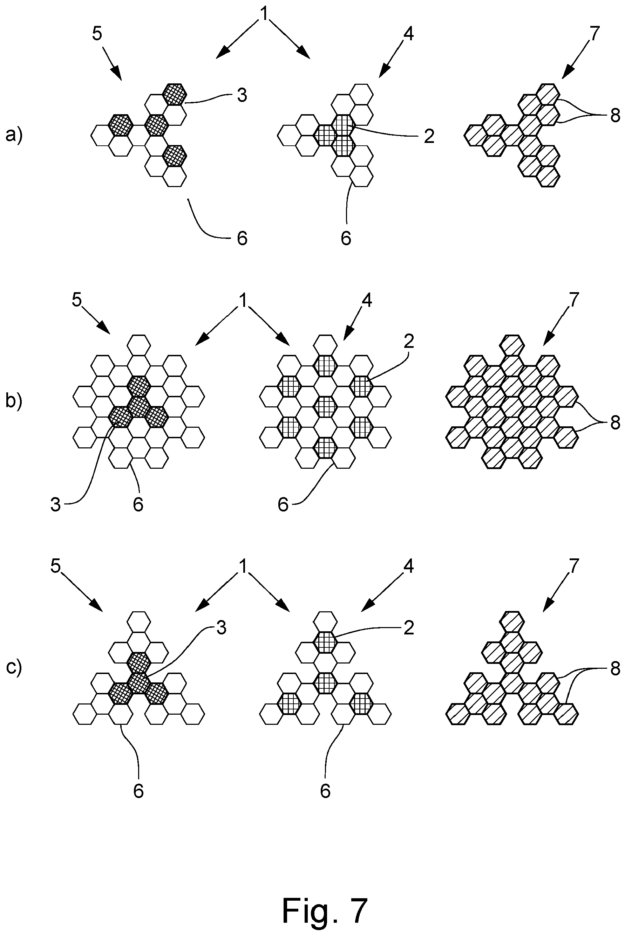

Die in den Fig. 7c und 8 dargestellten Radar-Antennenanordnungen 1 zeichnen sich dadurch aus, dass die Sendeanordnung 4 vier Sendeelemente 2 umfasst, wobei drei der Sendeelemente 2 die Eckpunkte eines gleichseitigen Dreiecks bilden und das vierte Sendeelement 2 im Zentrum des gleichseitigen Dreiecks platziert ist. Entsprechendes gilt für die Empfangselemente 3 in den Empfangsanordnungen 5 in den Fig. 1, 2 und 7a.

Fig. 8 zeigt eine Radar-Antennenanordnung 1 mit Empfangselementgruppen 11, die jeweils fünf Empfangselemente 3 umfassen, wobei drei Empfangselemente 3 in drei linear benachbarten Feldern, also Flachseite an Flachseite, angeordnet sind und senkrecht symmetrisch dazu zwei Empfangselemente in 3 benachbarten Feldern angeordnet sind, also Spitze an Spitze, sodass sich eine langgezogen-kreuzförmige Anordnung der Empfangselemente 3 ergibt. Die Radar-Antennenanordnung nach Fig. 8 weist insgesamt drei der zuvor beschriebenen Empfangselementgruppen 11 auf, die 120°-rotationssymmetrisch angeordnet sind. zusätzlich ist ein gemeinsames Empfangselement 3 vorgesehen, zu dem die Empfangselementgruppen 11 benachbart sind. Gemäß einer alternativen Betrachtungsweise kann die Empfangsanordnung 5 in Fig. 8 auch aus vier gleichartig strukturierten, sternförmigen Empfangselementgruppen mit jeweils vier Empfangselementen 3 zusammengesetzt angesehen werden.

Eine ähnliche Konfiguration zeigt die Radar-Antennenanordnung 1 in Fig. 9, wobei die fünf Empfangselemente 3 in gleicher Konfiguration, also drei Empfangselemente 3 linear, dazu zwei Empfangselemente 3 symmetrisch senkrecht, locker zusammenhängend angeordnet sind, wobei jedes Empfangselement 3 von sechs unbesetzten Feldern 9 der regelmäßig hexagonal parkettierten Fläche 6 umgeben ist.

In den Fig. 10 und 11 sind jeweils Radar-Antennenanordnungen 1 gezeigt mit drei 120°-rotationssymmetrisch angeordneten Sendeelementgruppen 10 mit jeweils 21 Sendeelementen 2, wobei die drei Sendeelementgruppen 10 zu einem gemeinsamen separaten zentralen Sendeelement 2 benachbart sind. Die tannenbaumförmigen Anordnungen zeichnen sich ebenfalls durch sehr hohe erzielbare Winkelauflösung und eine elektronische Antennenschwenkbarkeit in einem großen Bereich aus.

Die Radar-Antennenanordnungen 1, bei denen die Anzahl der Sendeelemente 2 zu der Anzahl der Empfangselemente 3 im Verhältnis 3 zu 4 steht, wie also bei den Anordnungen gemäß den Fig. 1, 2 und 6, weisen den Vorteil auf, dass entsprechende Elektronikkomponenten verwendet werden können und auch eingesetzt werden, die im gleichen Verhältnis Anschlüsse für die Ausgabe von Sendesignalen und dem Empfang bzw. die Verarbeitung von Empfangssignalen bereitstellen; diese elektronischen Komponenten sind in großen Stückzahlen zu vergleichsweise niedrigen Preisen verfügbar, weshalb sich auch Radar-Antennenanordnungen 1, die dieser Maßgabe folgen, vergleichsweise preiswert herstellbar sind.

### Bezugszeichen

- 1: Radar-Antennenanordnung
- 2: Sendeelemente
- 3: Empfangselemente
- 4: Sendeanordnung
- 5: Empfangsanordnung
- 6: hexagonal parkettierte Fläche
- 7: virtuelle Antennenanordnung
- 8: virtuelle Antennenelemente
- 9: unbesetzte Felder
- 10: Sendeelementgruppe
- 11: Empfangselementgruppe

## Patentansprüche

1. Radar-Antennenanordnung (1) mit mehreren Sendeelementen (2) und mit mehreren Empfangselementen (3), wobei die Sendeelemente (2) in einer Sendeanordnung (4) und die Empfangselemente (3) in einer Empfangsanordnung (5) jeweils in Feldern einer regelmäßig hexagonal parkettierten Fläche (6) angeordnet sind und wobei sich eine zugeordnete virtuelle Antennenanordnung (7) von virtuellen Antennenelementen (8) aus der geometrischen Faltung der Sendeanordnung (4) mit der Empfangsanordnung (5) ergibt,
**dadurch gekennzeichnet,**
**dass** die Empfangselemente (3) in der Empfangsanordnung (5) und die Sendeelemente (2) in der Sendeanordnung (4) so angeordnet sind, dass die virtuellen Antennenelemente (8) in der virtuellen Antennenanordnung (7) überdeckungsfrei angeordnet sind.

2. Radar-Antennenanordnung (1) nach Anspruch 1, **dadurch gekennzeichnet, dass** die Sendeelemente (2) und die Empfangselemente (4) in Feldern einer gemeinsamen regelmäßig hexagonal parkettierten Fläche (6) überdeckungsfrei angeordnet sind.

3. Radar-Antennenanordnung (1) nach Anspruch 1 oder 2, **dadurch gekennzeichnet, dass** mehrere Sendeelemente (2) eine Sendeelementgruppe (10) bilden und/oder mehrere Empfangselemente (3) eine Empfangselementgruppe (11) bilden, wobei die Radar-Antennenanordnung (1) mehrere gleichartige Sendeelementgruppen (10) und/oder Empfangselementgruppen (11) aufweist.

4. Radar-Antennenanordnung (1) nach Anspruch 3, **dadurch gekennzeichnet, dass** die mehreren gleichartigen Sendeelementgruppen (10) und/oder die mehreren gleichartigen Empfangselementgruppen (11) so angeordnet sind, dass die Sendeanordnung (4) und/oder die Empfangsanordnung (5) eine Rotationssymmetrie von 60° oder eine Rotationssymmetrie von 120° aufweist.

5. Radar-Antennenanordnung (1) nach einem der Ansprüche 1 bis 4, **dadurch gekennzeichnet, dass** eine überwiegende Zahl der Sendeelemente (2) der Sendeanordnung (4) für sich alleine oder gruppiert in Sendeelementgruppen (10) mit mehreren Sendeelementen (2) auf einem Sende-Kreisumfang angeordnet ist bzw. sind, insbesondere regelmäßig verteilt auf dem Sende-Kreisumfang angeordnet ist bzw. sind, insbesondere gemäß den Fig. 1 bis 3 und 5 bis 11, insbesondere alle bis auf drei der Sendeelemente (2) der Sendeanordnung (4) auf dem Sende-Kreisumfang angeordnet sind, insbesondere vollständig alle Sendeelemente (2) der Sendeanordnung (4) auf dem Sende-Kreisumfang angeordnet sind, oder dass eine überwiegende Zahl der Empfangselemente (3) der Empfangsanordnung (5) für sich alleine oder gruppiert in Empfangselementgruppen (11) mit mehreren Empfangselementen (3) auf einem Empfang-Kreisumfang angeordnet ist bzw. sind, insbesondere regelmäßig verteilt auf dem Empfang-Kreisumfang angeordnet ist bzw. sind, insbesondere alle bis auf drei der Empfangselemente (3) der Empfangsanordnung (11) auf dem Empfang-Kreisumfang angeordnet sind, insbesondere gemäß den Figuren 3 und 5, insbesondere vollständig alle Empfangselemente (3) der Empfangsanordnung (5) auf dem Empfang-Kreisumfang angeordnet sind, insbesondere gemäß Fig. 9 und 10.

6. Radar-Antennenanordnung (1) nach einem der Ansprüche 1 bis 5, **dadurch gekennzeichnet, dass** die Empfangselemente (3) der Empfangsanordnung (11) innerhalb eines Empfang-Kreisumfangs angeordnet sind, insbesondere wobei der Empfang-Kreisumfang identisch ist mit dem Sende-Kreisumfang, oder wobei der Empfang-Kreisumfang kleiner ist als der Sende-Kreisumfang, bevorzugt konzentrisch angeordnet ist zum Sende-Kreisumfang, oder dass die Sendeelemente (2) der Sendeanordnung (4) innerhalb eines Sende-Kreisumfangs angeordnet sind, insbesondere wobei der Sende-Kreisumfang identisch ist mit dem Empfang-Kreisumfang, oder wobei der Sende-Kreisumfang kleiner ist als der Empfang-Kreisumfang, bevorzugt konzentrisch angeordnet ist zum Empfang-Kreisumfang.

7. Radar-Antennenanordnung (1) nach Anspruch 3 oder einem der Ansprüche 4 bis 6, insoweit rückbezogen auf Anspruch 3, **dadurch gekennzeichnet, dass** je drei Sendeelemente (2) eine dicht gepackte dreieckförmige Sendeelementgruppe (10) bilden und insgesamt sechs dieser Sendeelementgruppen (10) gleichmäßig auf dem Sende-Kreisumfang verteilt sind, insbesondere wobei eine weitere dieser Sendeelementgruppen (10) im Zentrum des Sende-Kreisumfangs angeordnet ist, insbesondere gemäß den Figuren 3 und 5, oder dass je drei Empfangselemente (3) eine dicht gepackte dreieckförmige Empfangselementgruppe (11) bilden und insgesamt sechs dieser Empfangselementgruppen (11) gleichmäßig auf dem Empfang-Kreisumfang verteilt sind, insbesondere wobei eine weitere dieser Empfangselementgruppen (11) im Zentrum des Empfang-Kreisumfangs angeordnet ist.

8. Radar-Antennenanordnung (1) nach einem der Ansprüche 1 bis 7, **dadurch gekennzeichnet, dass** die Empfangselemente (3) locker zusammenhängend angeordnet sind, wobei jedes Empfangselement (3) von sechs unbesetzten Feldern der regelmäßig hexagonal parkettierten Fläche (6) umgeben ist und jedes Empfangselement (3) über wenigstens ein benachbartes unbesetztes Feld (9) der regelmäßig hexagonal parkettierten Fläche (6) zu zwei Empfangselementen (3) benachbart ist, insbesondere gemäß den Figuren 4, 5 und 6, insbesondere wobei im Zentrum der Anordnung unbesetzte Felder (9) in der regelmäßig hexagonal parkettierten Fläche (6) vorgesehen sind, wobei diese unbesetzten Felder in Summe eine Dreiecksform bilden, insbesondere gemäß Figur 6, oder dass die Sendeelemente (2) locker zusammenhängend angeordnet sind, wobei jedes Sendeelement (2) von sechs unbesetzten Feldern (9) der regelmäßig hexagonal parkettierten Fläche (6) umgeben ist und jedes Sendeelement (2) über wenigstens ein benachbartes unbesetztes Feld (9) der regelmäßig hexagonal parkettierten Fläche (6) zu zwei Sendeelementen (2) benachbart ist, insbesondere wobei im Zentrum der Anordnung unbesetzte Felder (9) in der regelmäßig hexagonal parkettierten Fläche (6) vorgesehen sind, wobei diese unbesetzten Felder (9) in Summe eine Dreiecksform bilden.

9. Radar-Antennenanordnung (1) nach einem der Ansprüche 1 bis 8, **dadurch gekennzeichnet, dass** eine Sendeelementgruppe (10) oder die Sendeanordnung (4) drei Sendeelemente (2) umfasst oder eine Empfangselementgruppe (11) oder die Empfangsanordnung (5) drei Empfangselemente (3) umfasst, wobei die drei Sendeelemente (2) oder die drei Empfangselemente (3) dicht gepackt sind, also jedes Sendeelement (2) unmittelbar zu den beiden anderen Sendeelementen (2) benachbart ist, insbesondere gemäß Fig. 3, 5, 6, 7a, bzw. jedes Empfangselement (3) unmittelbar zu den beiden anderen Empfangselementen (3) benachbart ist, oder wobei die drei Sendeelemente (2) oder die drei Empfangselemente (3) ein gemeinsames unbesetztes Feld (9) der regelmäßig hexagonal parkettierten Fläche (6) einschließen, insbesondere gemäß Fig. 9, oder wobei die drei Sendeelemente (2) oder die drei Empfangselemente (3) drei unmittelbar benachbarte unbesetzte Felder (9) der regelmäßig hexagonal parkettierten Fläche (6) einschließen, insbesondere gemäß Fig. 1 und 2, und/oder wobei die drei Sendeelemente (2) oder die drei Empfangselemente (3) die Eckpunkte eines größeren gleichseitigen Dreiecks bilden, insbesondere gemäß Figur 10.

10. Radar-Antennenanordnung (1) nach einem der Ansprüche 1 bis 9, **dadurch gekennzeichnet, dass** eine Sendeelementgruppe (10) oder die Sendeanordnung (4) vier Sendeelemente (2) umfasst oder eine Empfangselementgruppe (11) oder die Empfangsanordnung (5) vier Empfangselemente (3) umfasst, wobei drei der Sendeelemente (2) die Eckpunkte eines gleichseitigen Dreiecks bilden und das vierte Sendeelement (2) im Zentrum des gleichseitigen Dreiecks platziert ist, insbesondere gemäß den Figuren 7c und 8 oder wobei drei der Empfangselemente (3) die Eckpunkte eines gleichseitigen Dreiecks bilden und wobei das vierte Empfangselement (3) im Zentrum des gleichseitigen Dreiecks platziert ist, insbesondere gemäß den Figuren 1 und 7.

11. Radar-Antennenanordnung (1) nach einem der Ansprüche 1 bis 10, **dadurch gekennzeichnet, dass** eine Sendeelementgruppe (10) oder die Sendeanordnung (4) fünf Sendeelemente (2) umfasst oder eine Empfangselementgruppe (11) oder die Empfangsanordnung (5) fünf Empfangselemente (3) umfasst, wobei drei Sendeelemente (2) in drei linear benachbarten Feldern, also Flachseite an Flachseite, angeordnet sind und senkrecht symmetrisch dazu zwei Sendeelemente (2) in benachbarten Feldern angeordnet sind, also Spitze an Spitze, oder wobei drei Empfangselemente (3) in drei linear benachbarten Feldern, also Flachseite an Flachseite, angeordnet sind und senkrecht symmetrisch dazu zwei Empfangselemente in (3) benachbarten Feldern angeordnet sind, also Spitze an Spitze, insbesondere gemäß Figur 8.

12. Radar-Antennenanordnung (1) nach Anspruch 11, mit drei Sendeelementgruppen (10) oder Empfangselementgruppen (11), die 120°-rotationssymmetrisch angeordnet sind und ein zusätzliches gemeinsames Sendeelement (2) oder Empfangselement (3) aufweisen, zu dem die Sendeelementgruppen (10) oder Empfangselementgruppen (11) benachbart sind, insbesondere nach Figur 8.

13. Radar-Antennenanordnung (1) nach Anspruch 10 oder 11, **dadurch gekennzeichnet, dass** die fünf Sendeelemente (2) oder die fünf Empfangselemente (3) in gleicher Konfiguration, also drei Elemente (2, 3) linear, dazu zwei Elemente (2, 3) symmetrisch senkrecht, locker zusammenhängend angeordnet sind, wobei jedes Sendeelement (2) oder jedes Empfangselement (3) von sechs unbesetzten Feldern (9) der regelmäßig hexagonal parkettierten Fläche (6) umgeben ist, insbesondere gemäß Figur 9.

14. Radar-Antennenanordnung (1) nach Anspruch 4, **dadurch gekennzeichnet**, mit drei 120°-rotationssymmetrisch angeordneten Sendeelementgruppen (10) oder Empfangselementgruppen (11) mit jeweils 21 Sendeelementen (2) oder 21 Empfangselementen (3), die insbesondere angeordnet sind gemäß der Sendeelementanordnung (4) gemäß den Figuren 10 und 11, insbesondere wobei die drei Sendeelementgruppen (10) oder Empfangselementgruppen (11) zu einem gemeinsamen separaten zentralen Sendeelement (2) oder Empfangselement (3) benachbart sind.

15. Radar-Antennenanordnung (1) nach einem der Ansprüche 1 bis 14, **dadurch gekennzeichnet, dass** die Anzahl der Sendeelemente (2) zu der Anzahl der Empfangselemente (3) im Verhältnis 3 zu 4 steht.
